# EUROPEAN PATENT SPECIFICATION

(11) **EP 3 581 371 B1**
(45) Date of publication and mention of the grant of the patent: **14.04.2021**
(21) Application number: 18382424.2
(22) Date of filing: 14.06.2018
(51) Int. Cl.: B29C 73/18, B29C 35/02, B29C 35/08

(54) **A METHOD AND A SYSTEM FOR SELF-REPAIRING AN OBJECT**
VERFAHREN UND SYSTEM ZUR SELBSTREPARATUR EINES OBJEKTS
PROCÉDÉ ET SYSTÈME D'AUTORÉPARATION D'UN OBJET

(43) Date of publication of application: 18.12.2019
(73) Proprietor: Fundació Institut de Ciències Fotòniques, 08860 Castelldefels (Barcelona) (ES); Institució Catalana de Recerca I Estudis Avançats, 08010 Barcelona (ES)
(72) Inventor: STAVRINADIS, Alexandros, 08860 Castelldefels (ES); POWELL, Alexander, 08860 Castelldefels (ES); KONSTANTATOS, Gerasimos, 08860 Castelldefels (ES); QUIDANT, Romain, 08860 Castelldefels (ES)
(74) Representative: Ponti & Partners, S.L.P

(56) References cited:
- WO-A1-2018/080456
- CN-A- 105 385 144
- US-A1- 2015 328 847
- US-A1- 2016 096 956
- US-A1- 2016 200 011

## Description

### FIELD OF THE INVENTION

The present invention relates, in a first aspect, to a method according to claim 1 for producing an object and for self-repairing said object, by fusing together portions of a damaged region with heat generated from optically resonant particles dispersed within the object and already used for the manufacturing of the object.

A second aspect of the invention relates to a system according to claim 14 adapted to implement the method of the first aspect.

The invention is particularly applied to the self-repairing of 3D (three-dimensional) objects manufactured by additive manufacturing, using a layer-by-layer deposition process.

### BACKGROUND OF THE INVENTION

Different proposals are known in the art regarding methods for self-repairing objects. Some of them are based in the incorporation of different kinds of particles within a polymeric matrix that will solidify to form the object.

One of those proposals is disclosed in Rule, J. D., Brown, E. N., Sottos, N. R., White, S. R., & Moore, J. S. (2005). Wax-protected catalyst microspheres for efficient self-healing materials. Advanced Materials, 17(2), 205-208, which describes the incorporation of microencapsulated healing agents and catalysts dispersed into a polymeric matrix, so that self-healing is produced by polymerization within a crack. Such a micro-capsule healing method can timely repair the damaged location of materials, but the recycling times are limited due to local consumption of micro-capsules. Moreover, catalysts are costly and the healing efficiency and the stability of the catalyst within the matrix are problematic.

Another of said proposals is disclosed in "Highly efficient thermogenesis from Fe3O4 nanoparticles for thermoplastic material repair both in air and underwater", J. Mater. Chem. A, 2017, 5, 1221, and also in patent document CN105385144A, both describing manufacturing an object by pouring to a mould and solidifying therein a mixture of a polymer with Fe₃O₄ particles, so that when the so manufactured object is damaged, it can be fixed via illuminating the damaged region, as due to the optical absorbent properties of the Fe₃O₄ particles a photothermal effect is achieved that heats the polymer so that the damaged region is self-repaired by thermogenesis.

The photothermal efficiency of the particles used in said proposal, i.e. Fe₃O₄ particles is clearly improvable. Moreover, those particles are not particles used as heat sources for the manufacturing process, but added specifically for the self-repairing process.

On the other hand, although it is known in the art the use, in a manufacturing process, of optically resonant particles as heat sources for fusing together portions of a polymeric material to form an object, the re-use of those optically resonant particles for self-repairing the so manufactured object is not known.

It is, therefore, necessary to provide an alternative to the state of the art which covers the gaps found therein, by providing a method and a system for self-repairing an object which do not possess the above mentioned drawbacks associated to the existing proposals

Patent document US 2016/096956 A1 discloses another method for self-repairing an object. This document describes the incorporation of microencapsulated healing agents and catalysts (wax-protected catalyst microspheres) dispersed into a polymeric matrix, so that self-healing is produced by polymerization within a crack.

### SUMMARY OF THE INVENTION

To that end, the present invention relates, in a first aspect, to a method for producing and for self-repairing an object, wherein said object comprises a matrix of a material in a continuous solid form with optically resonant particles dispersed there within, and wherein said matrix has been made by at least partially fusing together (generally, by sintering and/or melting) particles and/or particulates of said material in a non-continuous solid form (such as in powder or particulate form) with heat transferred from said optically resonant particles that has been generated thereby when optically resonating induced by their exposure to building electromagnetic radiation.

The method comprises exposing a damaged region of said object to repairing electromagnetic radiation to be absorbed by at least some of said optically resonant particles that are dispersed therein to optically resonate to generate heat to at least partially fuse together (generally, by sintering and/or melting) portions of said matrix in thermal contact therewith.

A re-use, as heating sources, of the optically resonant particles already used for the object manufacturing process is therefore performed, not needing to embed in the matrix particles specific and exclusive for the self-repairing process.

The term "self-repairing" has been used in the present document to refer to a repairing process that is produced mainly because of the nature or properties of the damaged object, in this case with the aid of the above mentioned exposure to a repairing electromagnetic radiation.

Generally, the at least partially fused material is cooled down to solidify, both for the making of the object and, according to the method of the first aspect of the invention, for the repairing of the damaged region. Such cooling down can be carried out by actively decreasing the temperature of the object or damaged region, for example with some kind of refrigerating means, or just by leaving the object to rest to cool down for some time, for example at ambient temperature.

Preferably, the matrix material is made to absorb 50% less efficiently the repairing electromagnetic radiation compared to the optically resonant particles.

Depending on the embodiment, the above identified as building electromagnetic radiation and repairing electromagnetic radiations are equal or different radiations, but in any case each of them has a wavelength range that at least in part overlaps the absorption wavelength of the optically resonant particles.

For an embodiment, said wavelength includes a specific wavelength at which the optically resonant particles has a resonant peak, whether its strongest resonant peak or not, and/or a wavelength included at least in its absorption resonance spectra.

In the present invention, the building and repairing electromagnetic radiations can be, for some embodiments, in the form of microwaves, visible light, broadband or narrowband sources of ultraviolet (UV) light, NIR (Near Infrared), or mid-IR of far-IR electromagnetic waves, or a combination thereof.

A non-limited list of sources for such radiations can be: laser, LED, any type of light lamps, such as halogen lamps and IR-lamps, heated bars, flash lamps, laser (with single wavelength or with a plurality of wavelengths), other broadband or narrowband sources of ultraviolet (UV) light, visible or infrared electromagnetic radiation. The wavelength of the source can be tuned to match the resonance of the optically resonant particles.

In an embodiment, the building and/or repairing electromagnetic radiations is produced by a lamp that emits radiation which according to its spectral characteristics can be exclusively considered as being the building or repairing electromagnetic radiation. In another embodiment the building and/or the repairing electromagnetic radiation can be produced by a radiation source which emits radiation for which only a part of can be considered as the building and/or the repairing electromagnetic radiation.

Since the building and repairing electromagnetic radiation are primarily absorbed by and results to heating of the said optically resonant particles, said electromagnetic radiations are preferably partly resonant, and most preferably fully resonant, to the resonance of the optically resonant particles. Such resonance can be any or a combination of the following types of resonance: Mie resonance or/and plasmon resonance, galley whispering mode resonance, electronic transition of charge carriers resonance. In the aforementioned, "partly resonant" refers to the case where the building and repairing electromagnetic radiation contains some photons of wavelengths which coincide with the wavelengths at which the optically resonant particles exhibit any of the aforementioned types of resonance. In addition, in the aforementioned, "fully resonant" refers to the case where the building and repairing electromagnetic radiation only contains photons of wavelengths which coincide with the wavelengths at which the optically resonant particles exhibit any of the aforementioned types of resonance.

Ideally, that building and repairing electromagnetic radiation can be of a wavelength range covering the whole spectrum of the blackbody radiation, including a wavelength range from 100 nm to 3000 nm, preferably from 250 nm to 2000 nm, and more preferably from 400 nm to 2000 nm, since radiation of such wavelengths is usually not absorbed strongly by the material used to make the matrix of the object. The optically resonant particles can be tuned so that their strongest resonant peak and/or if non, or multiply resonant, the greatest portion of their output or absorption spectra is in said wavelength ranges.

Each of the building and repairing electromagnetic radiation can be a radiation of a multiple of wavelengths where at least some of them are absorbed by the optically resonant particles.

For an embodiment, the optically resonant particles are made, and arranged within said matrix, to maintain their optical resonant properties to generate heat enough to at least partially fuse together those portions of said matrix in thermal contact therewith, for a plurality of times.

For an embodiment, the material of the above mentioned matrix is a thermoplastic material, while for another embodiment said material is an elastomeric material, whether thermoplastic or not.

Advantageously, said elastomeric material has elastic and thermomechanical properties as to be able to substantially recover its original consistency in terms of mechanical properties and/or spatial continuity.

In an embodiment, the matrix material can be constituted of particles of diameter 0.001-1000 µm, and preferably of diameter 0.1-100 µm, and most preferably 1-100 µm.

In another embodiment, the matrix material consists of any or any combination of the following types of materials: Styrenic block copolymers, TPS (TPE-s), Thermoplastic polyolefinelastomers, TPO (TPE-o), Thermoplastic Vulcanizates, TPV (TPE-v or TPV), Thermoplastic polyurethanes, TPU (TPU), Thermoplastic copolyester, TPC (TPE-E), Thermoplastic polyamides, TPA (TPE-A).

For a preferred embodiment of the method of the first aspect of the present invention, in the object, both before and after performing the above described self-repairing, the optically resonant particles are dispersed in a substantially non-agglomerated and substantially non-self-sintered form within the material that is in a continuous solid form, including the self-repaired damaged region, so that the heating properties and the optical properties of the optically resonant particles are not adversely affected, and they can be used a plurality of times for self-repairing purposes.

In the present document, the terms "substantially non-agglomerated" and "substantially non-self-sintered" are used to define the lack of a "substantial agglomeration" and "substantial self-sintering", i.e. the lack of the case where a large enough fraction of the optically resonant particles present dispersed in the powder material have agglomerated and self-sintered so that it causes a substantial spectral change which will be detrimental to either the heating properties and/or the optical properties of the optically resonant particles.

Therefore, said substantial agglomeration and substantial self-sintering can be defined using the absorption spectra of the optically resonant particles, whether they are in a solution, on a planar surface, or in a manufactured object, where the optically resonant particles may or may not have been used to initiate the fusing together of the particles and/or particulates of the material in a non-continuous solid form or of the portions of the matrix.

Substantially non-agglomerated and substantially non-self-sintered form therefore refers to the lack of a substantial agglomeration and substantial self-sintering referring to an agglomeration and self-sintering which causes a change in the absorption spectra of the optically resonant particles in the form of at least one shift in one or more optical resonance peaks above or equal to five times the full-width at half maximum (FWHM) and/or at least a broadening of one or more optical resonance peaks above or equal to five times the FWHM. Here the initial FWHM is defined from measurements of the optically resonant particles before being dispersed in the powder material, and for example coated in an appropriate anti-agglomeration layer in a well-dispersed solution.

For an embodiment associated to a given shape and material of optically resonant particles in a given powder material, said substantially non-agglomerated and substantially non-self-sintered form refers to the lack of a substantial agglomeration and substantial self-sintering referring to an agglomeration and self-sintering which causes a change in the absorption spectra of the optically resonant particles in the form of at least one shift in one or more optical resonance peaks above or equal to three times the full-width at half maximum (FWHM) and/or at least a broadening of one or more optical resonance peaks above or equal to three times the FWHM.

For another embodiment associated to another given shape and material of optically resonant particles in a given powder material, said substantially non-agglomerated and substantially non-self-sintered form refers to the lack of a substantial agglomeration and substantial self-sintering referring to an agglomeration and self-sintering which causes a change in the absorption spectra of the optically resonant particles in the form of at least one shift in one or more optical resonance peaks above or equal to two times the full-width at half maximum (FWHM) and/or at least a broadening of one or more optical resonance peaks above or equal to two times the FWHM.

For a further embodiment associated to a further given shape and material of optically resonant particles in a given powder material, said substantially non-agglomerated and substantially non-self-sintered form refers to the lack of a substantial agglomeration and substantial self-sintering referring to an agglomeration and self-sintering which causes a change in the absorption spectra of the optically resonant particles in the form of at least one shift in one or more optical resonance peaks above or equal to 1.5 times the full-width at half maximum (FWHM) and/or at least a broadening of one or more optical resonance peaks above or equal to two times the FWHM.

Regarding the optically resonant particles, depending on the embodiment, they include one or more different types of particles that generate optical resonance by at least one of the following non-limiting examples of mechanisms: by electronic transition effect, plasmonic effect, Mie effect, and/or whispering gallery mode effect, or a combination thereof.

With respect to the size of the optically resonant particles, they have an average cross-sectional length that is from 1 nm up to 500 µm (determined, for example, by electron microscopy and/or light microscopy), preferably from 1 nm up to 5 µm, depending on the embodiment, to be adapted to the requested application, and also to provide a desired tuning of the optical properties of the optically resonant particles.

Depending on the embodiment, the optically resonant particles are metallic, organic or inorganic nanoparticles and/or microparticles of various shapes, such as spherical particles, or rod-shaped particles, or tube-shaped particles, or star-shaped particles, or hollow particles, or platelets or flakes or more complex shapes. In an embodiment, the optically resonant particles are of quasi-spherical shape and of diameter 0.3-10000 nm, more preferably 1-1000 nm, most preferably 5-500 nm. In another embodiment, the optically resonant particles are particles of any or combinations of the following materials: Au, Ag, Al, Bi, Sn, Cu, CuO, WO₃, Sn:lnO, AI:ZnO, Bi, or any mixture of the above.

According to an embodiment, the optically resonant particles are coated with an anti-agglomeration coating that is configured to cooperate in the avoiding of the above mentioned substantial agglomeration and substantial self-sintering of the optically resonant particles.

For some embodiments, said anti-agglomeration coating is made to maximize thermal shape stability and/or to maximize thermal chemical stability, wherein, generally, said anti-agglomeration coating is an inorganic and/or organic layer attached to the surface of the optically resonant particles.

According to some embodiments, besides the optically resonant particles the object contains, within the above mentioned matrix, additional materials which serve various functionalities which may or may not be related to the ability of the manufactured object to be repaired/healed under its exposure to the repairing electromagnetic radiation. For example, in an embodiment, said additional materials are one or more colour pigments, which are used for colouring the object. In another embodiment, the additional material is a good conductor of heat and its purpose is to enhance the transfer of heat from the optically resonant particles to the matrix material. A non-limiting example of such additional material is flakes of graphene. In another embodiment, the additional material are chemical substances which act as heat-activated precursors for the synthesis of the matrix material. In the latter case, when the optically resonant particles are irradiated and heated by the repairing electromagnetic radiation, part of its heat is passed to said additional material which upon heated reacts to generate additional matrix material which is fused together with the pre-existing matrix material for a better repair of the damaged region, for example by better filling a hole with the generated additional matrix material without the object undergoing though shrinkage or morph alteration.

For an embodiment, the above mentioned damaged region includes at least one of the following damages or defects: a cut, a schism, a hole, a rough surface, or an alteration in the morph of the object. The damaged region also includes regions of the object that surround said damage(s) or defect(s). The dynamics followed by the matrix material to self-repair the damaged region depend on the type of damage/defect associated thereto. For example, for a hole, the matrix material melts (at least partially), flows and fills the hole so that once solidified the hole is covered thereby, while for a rough surface the matrix material melts (at least partially) and redistributes over the surface thus smoothening the surface.

The method comprises exposing a damaged region of said object to repairing electromagnetic radiation to be absorbed by some of said optically resonant particles that are dispersed therein to optically resonate to generate heat to at least partially fuse together (generally, by sintering and/or melting) portions of said matrix in thermal contact therewith.

While for some embodiments, the damage or defect does not split in different parts the object, for an embodiment it does, so that the damaged region includes portions of the object that have been physically detached by a damage or defect.

For an implementation of that embodiment, the method of the first aspect of the invention comprises bringing into physical contact said physically detached portions before and/or during their exposure to the repairing electromagnetic radiation.

The method of the first aspect of the present invention is valid for repairing any type of damage or defect, whether located at the surface of the object or at an inner location therein.

For that case, i.e. for a damaged region placed in an inner location of the object, the method comprises penetrating into the object with the repairing electromagnetic radiation up to said inner location so that the damaged region is exposed thereto, and the optical resonant particles located therein are excited to optically resonate.

For an object or at least a damaged region thereof placed within water, the method of the first aspect of the invention comprises selecting a wavelength or sets of wavelengths, for the repairing electromagnetic radiation to which the damaged region is to be exposed, which fall within one of the optical transparency wavelength windows of water.

When, instead of water, one or more different media must be traversed by the repairing electromagnetic radiation in order to reach the damaged region, a wavelength or sets of wavelengths appropriate for that purpose are selected for the repairing electromagnetic radiation.

Other properties of the repairing electromagnetic radiation (such as intensity) are also selected for the specific application, in order to expose the damaged region to that repairing electromagnetic radiation.

For an embodiment, the method of the first aspect of the invention further comprises a pre-heating step for pre-heating at least the damaged region up to a pre-heating temperature at which no fusion (sintering and/or melting) is yet caused, and then performing the exposure of the damaged region(s) to the repairing electromagnetic radiation.

Although for an embodiment the object only comprises one layer, for a preferred embodiment, the object to be self-repaired is a 3D object.

According to a preferred implementation of said preferred embodiment, the 3D object has been manufactured using a layer-by-layer deposition process, by applying, over an already formed layer that includes the above mentioned matrix with optically resonant particles dispersed there within, at least a further layer of the material in a non-continuous solid form with optically resonant particles already dispersed there within or subsequently provided thereon and dispersed there within (for example, by depositing by droplet deposition a composition including the optically resonant particles on at least a region of said further layer of the material in a non-continuous solid form), and exposing to building electromagnetic radiation the optically resonant particles provided on the further layer to make them optically resonate to generate heat to at least partially fuse together particles and/or particulates, of the material in a non-continuous solid form of the further layer, which are in thermal contact therewith.

In an embodiment, each of said layers has a thickness which is preferably 0.001-10000 µm, more preferably 0.01 -1000 µm, and most preferably 10-1000 µm.

The present invention also relates, in a second aspect, to a system for producing and for self-repairing an object according to claim 14.

The system of the second aspect of the present invention is adapted to implement the method of the first aspect.

Any of the above listed radiation sources can be used for implementing the controllable electromagnetic radiation source of the system of second aspect of the invention.

For an embodiment, the system of the second aspect of the present invention further comprises:
- monitoring means configured and arranged for monitoring one or more parameters of at least the damaged region of the object, at least during its exposure to the repairing electromagnetic radiation, and generate corresponding monitoring signals; and
- a controller operatively connected to the monitoring means to receive said monitoring signal, and to the controllable electromagnetic radiation source, said controller being made to control the operation (and preferably also the power) of the controllable electromagnetic radiation source based on the received monitoring signals.

The controller is also configured to control the operation (and preferably also the power) of the controllable electromagnetic radiation source when no monitoring signals are received, i.e. independently of the monitoring signals, for example at the start of the repairing process.

Additional components are included in the system of the second aspect of the invention, for some embodiments, such as components which control the position and mechanical state of the object before and/or during and/or after its exposure to the repairing electromagnetic radiation, or other additional components which control the environmental conditions prior or/and during or/and after the exposure of the object to the repairing electromagnetic radiation, or other additional components implementing the above mentioned monitoring means, to monitor the above mentioned parameters, particularly the image and/or structure and/or temperature of the object, before and/or during and/or after the exposure of the object to the repairing electromagnetic radiation.

For an embodiment, the operation of the system of the second aspect of the invention, implementing the technique used for inducing and completing the self-repair of the object after its damage, is as following: the object, and more specifically the region of the object containing the damage, i.e. the damaged region, is positioned in the passage of the repairing electromagnetic radiation which can be produced by the controllable electromagnetic radiation source, while during the aforementioned positioning of the object there is no or almost no repairing electromagnetic radiation heating the object. Then the controllable electromagnetic radiation source is turned on meaning that is configured as to allow repairing electromagnetic radiation to exit the controllable electromagnetic radiation source and heat the object and specifically to heat the damaged region. As a result, the temperature of the damaged region rises, and as a further result the damage is repaired.

This repair is enabled by a number of physical effects which individually or in any combination between them result to the repair process, a non-limiting list of such effects are: sintering of the matrix material, melting and spatial reorganization (re-positioning) of the matrix material, alteration of the chemical structure of the matrix material, creation of new matrix material from the reaction of any non-matrix materials present in the object.

The extend and speed of any of the aforementioned effects are controlled by controlling the intensity and spectral characteristics of the repairing electromagnetic radiation which eventually controls the temperature of the region of the object absorbing it, as has been described earlier with respect to the method of the first aspect of the invention. When the repair process is complete, or when is partially complete depending on the desired outcome, the controllable electromagnetic radiation source is configured as to no longer have repairing electromagnetic radiation exiting it and heating the object. Then the object may be optionally left to rest to cool down for some time.

For an embodiment, the system of the second aspect of the invention comprises an optical control system, associated to the controllable electromagnetic radiation source and to the controller, to form an irradiation system, for controlling the area or part or multiple of areas or parts of the object being exposed to the repairing electromagnetic radiation.

Depending on the embodiment, the optical control system comprises any individual optical components or any combination of optical components, such as lenses, mirrors, opt mechanical parts (e.g. scanners, shatters, optical filters, casings etc.) as is well known in the prior art regarding optical systems, arranged in a way that serves at least one or more of the following purposes: a) control the intensity and/or maximize the intensity of the repairing electromagnetic radiation at the areas where it hits the object, b) control the shape and/or size and/or volume of the area of the object being irradiated, c) control and/or change position of the area on the object being irradiated by repairing electromagnetic radiation.

For some embodiment, the optical control system or any parts of it is attached to the controllable electromagnetic radiation source, or not be attached but located close to the source of electromagnetic radiation, and/or is located close and/or attached to the object.

In an embodiment, the controllable electromagnetic radiation source comprises a laser, which emits the repairing electromagnetic radiation, and a waveguide attached to the source which acts as an optical control system.

In another embodiment, the controllable electromagnetic radiation source comprises an array of LEDs, which emits the repairing radiation, and lenses attached to each LED of the array, wherein these lenses combined act as the optical control system.

In another embodiment, the controllable electromagnetic radiation source partially consists of a LED array, which emits the repairing electromagnetic radiation and is positioned at the head of a handheld torch, wherein atop of the LED array exists a set of lenses, which acts as the optical control system.

As mentioned above, the system of the second aspect of the present invention may optimally contain additional components. For example, an additional component could be one to provide and control the electrical power driving the controllable electromagnetic radiation source, such as a power supply unit connected to the electricity grid or a portable power supply unit such as one containing batteries. Such components may optionally contain additional subcomponents such as electrical switches, and electronic elements and/or current and/or voltage regulators.

As mentioned, another optional additional component or set of components could be one that controls the position and mechanical state of the object before and/or during and/or after its exposure to the repairing electromagnetic radiation. For example, if the object contains a cut or a schism or a hole or any other type of defect which has ultimately caused the physical detachment of some of the object's parts that surround such defect, it may be necessary for such parts to be externally forced into physical contact between them before and/or during their irradiation by repairing electromagnetic radiation, which would cause them to permanently stick and/or sinter together. In the simplest case, such parts may be brought into physical contact between them using human hands. In other cases, such parts may be brought into physical contact using any type of tools and manmade apparatuses, included in the system of the second aspect of the invention for some embodiments, a non-limiting list of which is: appliers, stickers, clips, mechanical arms, robotic arms. A condition that all such tools must satisfy is that when applied to the object during its irradiation with the repairing electromagnetic radiation, they must allow all or part of the radiation to reach the part of the object containing the damage, i.e. the damaged region(s).

As mentioned, another optional additional component or set of components could be one that controls the environmental conditions prior or/and during or/and after the exposure of the object to the repairing electromagnetic radiation. Such component could have any or a combination of the following functionalities: to isolate the object from the environment of from the user during the repair process, to protect the user from exposure to the repairing electromagnetic radiation if such radiation is hazardous, to control the environmental conditions such as the temperature, the pressure, the atmosphere in which the object is located during the repair process. In an embodiment, such optional component could consist of a set of heaters of any kind that control the baseline temperature of the object prior or/and during and/or after its exposure to the repairing electromagnetic radiation, because the baseline temperature could further affect the speed and effectiveness of the repair process. A pre-heating of the object, at least at the damaged region, could be performed with said heaters, up to a pre-heating temperature at which no sintering/melting is yet caused.

As mentioned above, for some embodiments, the system of the second aspect of the invention comprises monitoring means implemented by additional components or sets of components for monitoring the image and/or structure and/or temperature of the object before and/or during and/or after the exposure of the object to the curing electromagnetic radiation. Such component or set of components could perform several purposes which may or may not be necessary for the repair process, a non-limiting list of such purposes is the following: to monitor whether the parts of the object at the immediate vicinity of the defect/damage are in physical contact, to monitor the repair process and signal when the repair process is completed, to monitor the temperature of the object and particularly the temperature of the part of the object being irradiated with repairing electromagnetic radiation and provide feedback to the controller for controlling the intensity of the repairing electromagnetic radiation emitted with the controllable electromagnetic radiation source, to monitor and signal when any undesired side effects on the morphology of the object takes place during the repair process.

In an embodiment, the monitoring means comprises a photographic camera and/or video camera. In another embodiment, the monitoring means comprises a thermal camera and/or one or more temperature sensors.

In another embodiment, in order to carry out the above mentioned embodiment of the method of the first aspect of the invention for which the object or at least a damaged region thereof is placed within water, the controllable electromagnetic radiation source is configured to emit repairing electromagnetic radiation, partially or fully, of a wavelength or a set of wavelengths which fall within one of the optical transparency windows of water.

For an implementation of said embodiment, the system of the second aspect of the invention comprises a water sealed casing housing therein at least the controllable electromagnetic radiation source.

Further aspects of the present invention relate to a method and a system that, in addition to the features defined by the method and system of the first and second aspects of the present invention, comprise steps or means for the manufacturing of the object to be self-repaired as described above. International Application PCT/EP2018/059185 (publication number WO2018189190 A1) discloses the production of a 3D object, wherein said 3D object is the object to be self-repaired by the present invention by re-using the optically resonant particles, as indicated above, already used for the manufacturing process.

Further aspects of the present disclosure refer to a method and a system that differ from the ones of the first and second aspects only in that, instead of the optically resonant particles, comprise the use another type of photothermal absorber not necessarily resonant, but which is used for the manufacturing of the object, and also reused for the self-repairing process, i.e. for the repairing of the damaged region(s) of the object.

### BRIEF DESCRIPTION OF THE FIGURES

In the following some preferred embodiments of the invention will be described with reference to the enclosed figures. They are provided only for illustration purposes without however limiting the scope of the invention.
Figure 1 is a schematic representation of the system of the second aspect of the present invention, for an embodiment.
Figure 2 shows an object to be repaired by means of the method of the first aspect of the invention, for an embodiment for which the object has three damaged regions, identified as "damage 1", "damage 2", and "damage 3".

### DESCRIPTION OF THE PREFERRED EMBODIMENTS

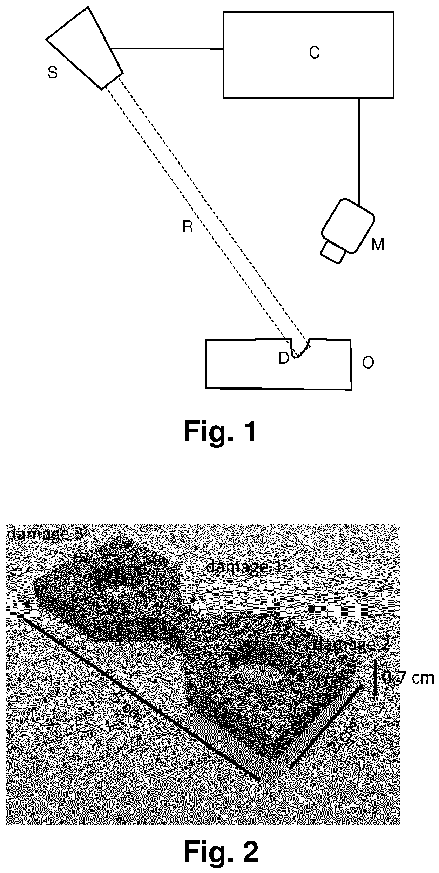

The system of the second aspect of the present invention is schematically shown in Figure 1, and, as already explained above, is applied to the self-repairing of an object O that comprises a matrix of a material in a continuous solid form with optically resonant particles dispersed there within, wherein that matrix has been made by at least partially fusing together particles and/or particulates of said material in a non-continuous solid form with heat transferred from said optically resonant particles that has been generated thereby when optically resonating induced by their exposure to building electromagnetic radiation

The system of the second aspect of the invention comprises a controllable electromagnetic radiation source S configured and arranged for exposing a damaged region D of the object O to repairing electromagnetic radiation R to be absorbed by some of the optically resonant particles that are dispersed therein to optically resonate to generate heat to at least partially fuse together portions of the matrix in thermal contact therewith.

For the illustrated embodiment, the system also comprises:
- monitoring means M configured and arranged for monitoring one or more parameters of at least the damaged region D of the object O, at least during its exposure to said repairing electromagnetic radiation R, and generate corresponding monitoring signals; and
- a controller C operatively connected to the monitoring means M to receive said monitoring signals, and to the controllable electromagnetic radiation source S, said controller C being made to control the operation of the controllable electromagnetic radiation source S based on the received monitoring signals.

In the following, some experiments performed by the present inventors are described, for some working embodiments, to support the goodness and efficiency of the different aspects of the present invention.

Gold nanorods exhibiting a plasmon resonance peak with a full width at half maximum of about 100 nm and centered at about 850 nm, were synthesized and dispersed in ethanol at a concentration of 0.2 mg/ml. Then 1 L of such solution was mixed with 1 kg of TPU (thermoplastic polyurethane) powder (product name: ADSint TPU80) purchased from ADVANC3D Materials® GmbH. The mixture was left drying for 24 hr. resulting to a mixed material in which the gold nanorods are the optically resonant particles and the TPU powder is the matrix material referred above when describing the method and system of the present invention.

Then, the mixed material was transferred to an SLS-type 3D printer equipped with a 1 W 850 nm laser which acted as the source of the repairing electromagnetic radiation (808 nm) of the present the invention. Then, an object was manufactured by 3D printing, the shape of which is shown in Figure 2, and having the dimensions indicated in the figure. It is noted that the object appeared to be highly flexible and to exhibit good elasticity. For the printing process the following parameters were used: 0.015 mm layer thickness, baseline temperature 80 °C, 50 mm/s laser writing speed.

After the object was manufactured/printed and cleaned, it was damaged by cutting it in three areas of it as indicated in Figure 2.

For fixing "damage 1", the object was positioned in front of a second 808 nm laser source which acts as the controllable electromagnetic radiation source of the first and second aspects of the invention. An optical fiber with a waveguide at its tip was attached to the laser, which acts as an example of the optical control system of the second aspect of the invention, and the combination of the laser with the optical control system form, for an embodiment, the irradiation system of the system of the second aspect of the invention.

The object was specifically positioned as be able to have the laser beam exiting the waveguide directly illuminating the area of the object containing "damage 1". In addition, the object was positioned by hand as to have its parts that surround "damage 1" (see Figure 2) directly touching each other. For ensuring that these parts remain in good physical contact, two heavy pieces of metal were positioned on two opposing sides of the object as to prevent it from moving, these pieces of metal act as an example of an optional subsystem of the irradiation system of the system of the second aspect of the invention. The object with the laser and the rest of the irradiation system were enclosed in a black chamber for preventing exposure of the user to the laser beam. This plastic chamber is another example of an optional subsystem of the irradiation system of the system of the second aspect of the invention.

Within the black chamber there was also a video camera and a thermal camera for monitoring the structure, position, morphology and temperature of the object, these cameras act as examples of optional subcomponents of the second aspect of the invention. The laser was driven by a control power unit which also acts as an example of an optional subcomponent. The control unit and the cameras were controlled by a personal computer which also form part of the monitoring means of the system of the second aspect of the invention, for an embodiment.

When the object was positioned, the laser was turned on and its intensity was adjusted to about 3 W/cm² as to cause heating of the area of the object being illuminated to about 130-150 °C, as monitored by the thermal camera. The laser was left turned on for about 60 s, after which it was turned off and the object was left to cool down for 60 s. Then the object was removed and it appeared as repaired, meaning that the parts surrounding the area formerly containing "damage 1" have been sintered with each other and "damage 1" was no longer present. In addition, the part of the object formerly containing "damage 1", exhibited good mechanical strength meaning that it could sustain without breaking apart mechanical forces applied by hand.

Then, the object was positioned in front of a LED array made of several 850 nm LEDs each of which was enclosed within its own individual plastic transparent cover, the LEDs and the plastic covers act as examples of controllable electromagnetic radiation sources and optical control system which in combination form an irradiation system of the second aspect of the invention. The object was more specifically positioned as to allow illumination of the object's areas containing "damage 2" and "damage 3". Then the LED array was turned on for 60 s, and then it was tuned of. After this process, "damage 2" and "damage 3" had been repaired and disappeared.

The object was further positioned in front of a handheld light torch powered by batteries. The light of the torch was produced by a small LED array producing light of 850 nm wavelength. In front of the LED array the torch contained a set of plastic lenses. It was noticed that the object heats up when positioned in front of the torch. Therefore, the torch also acts an example of the irradiation system of the system of the second aspect of the invention.

A person skilled in the art could introduce changes and modifications in the embodiments described without departing from the scope of the invention as it is defined in the attached claims.

## Claims

1. A method for producing an object and for self-repairing said object, wherein said object (O) comprises a matrix of a material in a continuous solid form with optically resonant particles dispersed there within, and wherein said matrix is made by at least partially fusing together particles and/or particulates of said material in a non-continuous solid form with heat transferred from said optically resonant particles that is generated thereby when optically resonating induced by their exposure to building electromagnetic radiation,
and wherein the method comprises exposing a damaged region (D) of said object (O) to repairing electromagnetic radiation (R) to be absorbed by at least some of said optically resonant particles that are dispersed therein, to optically resonate to generate heat to at least partially fuse together portions of said matrix in thermal contact therewith.

2. A method according to claim 1, wherein said optically resonant particles are made, and arranged within said matrix, to maintain their optical resonant properties to generate heat enough to at least partially fuse together those portions of said matrix in thermal contact therewith, for a plurality of times.

3. A method according to claim 1 or 2, wherein said material is a thermoplastic material.

4. A method according to claim 1, 2 or 3, wherein said material is an elastomeric material.

5. A method according to any of the previous claims, wherein, in the object (O), both before and after performing the self-repairing, the optically resonant particles are dispersed in a substantially non-agglomerated and substantially non-self-sintered form within the material that is in a continuous solid form, including the self-repaired damaged region (D).

6. A method according to claim 5, wherein said substantially non-agglomerated and substantially non-self-sintered form refers to the lack of a substantial agglomeration and substantial self-sintering referring to an agglomeration and self-sintering which causes a change in the absorption spectra of the optically resonant particles (P) in the form of at least one shift in one or more optical resonance peaks above or equal to five times the full-width at half maximum and/or at least a broadening of one or more optical resonance peaks above or equal to five times the full-width at half maximum.

7. A method according to any of the previous claims, wherein said optically resonant particles are coated with an anti-agglomeration coating.

8. A method according to claim 7, wherein said anti-agglomeration coating is made to maximize thermal shape stability and/or to maximize thermal chemical stability.

9. A method according to any of the previous claims, wherein said damaged region (D) includes at least one of the following damages or defects: a cut, a schism, a hole, a rough surface, and a morph alteration.

10. A method according to any of the previous claims, wherein said damaged region (D) includes portions of the object (O) hat have been physically detached by a damage or defect, the method comprising bringing into physical contact said physically detached portions before and/or during their exposure to the repairing electromagnetic radiation (R).

11. A method according to any of the previous claims, wherein for a damaged region (D) placed in an inner location of the object (O), the method comprises penetrating into the object with the repairing electromagnetic radiation (R) up to said inner location so that the damaged region (D) is exposed thereto.

12. A method according to any of the previous claims, wherein for an object (O) or at least a damaged region (D) thereof placed within water, the method comprises selecting a wavelength or sets of wavelengths, for the repairing electromagnetic radiation (R) to which the damaged region (D) is to be exposed, which fall within one of the optical transparency wavelength windows of water.

13. A method according to any of the previous claims, wherein said object (O) is a three-dimensional object that has been manufactured using a layer-by-layer deposition process, by applying, over an already formed layer that includes said matrix with optically resonant particles dispersed there within, at least a further layer of said material in a non-continuous solid form with optically resonant particles already dispersed there within or subsequently provided thereon and dispersed there within, and exposing to building electromagnetic radiation the optically resonant particles provided on the further layer to make them optically resonate to generate heat to at least partially fuse together particles and/or particulates, of the material in a non-continuous solid form of the further layer, which are in thermal contact therewith.

14. A system for producing an object and for self-repairing said object, wherein said object (O) comprises a matrix of a material in a continuous solid form with optically resonant particles dispersed there within, wherein said matrix has been made by at least partially fusing together particles and/or particulates of said material in a non-continuous solid form with heat transferred from said optically resonant particles that has been generated thereby when optically resonating induced by their exposure to building electromagnetic radiation, and wherein the system comprises:
- means for the manufacturing of said object (O), said means comprising a controllable electromagnetic radiation source configured and arranged for exposing said optically resonant particles to said building electromagnetic radiation, with a wavelength tuned to match the resonance of the optically resonant particles; and
- a controllable electromagnetic radiation source (S) configured and arranged for exposing a damaged region (D) of said object (O) to repairing electromagnetic radiation (R), with a wavelength tuned to match the resonance of the optically resonant particles, to be absorbed by some of said optically resonant particles that are dispersed therein to optically resonate to generate heat to at least partially fuse together portions of said matrix in thermal contact therewith.

15. A system according to claim 14, further comprising:
- monitoring means (M) configured and arranged for monitoring one or more parameters of at least the damaged region (D) of the object (O), at least during its exposure to said repairing electromagnetic radiation (R), and generate corresponding monitoring signals; and
- a controller (C) operatively connected to said monitoring means (M) to receive said monitoring signal, and to the controllable electromagnetic radiation source (S), said controller (C) being made to control the operation of the controllable electromagnetic radiation source (S) based on the received monitoring signals.

## Patentansprüche

1. Verfahren zum Herstellen eines Objekts und zur Selbstreparatur des Objekts,
wobei das Objekt (O) eine Matrix eines Materials in einer kontinuierlichen festen Form mit darin dispergierten, optisch resonanten Partikeln umfasst, und wobei die Matrix hergestellt wird durch mindestens teilweises Verschmelzen von Partikeln und/oder von partikelförmigen Bestandteilen des Materials in einer nicht-kontinuierlichen festen Form mit von den optisch resonanten Partikeln übertragener Wärme, die dadurch erzeugt wird, wenn eine optische Resonanz durch deren Exposition gegenüber aufbauender elektromagnetischer Strahlung induziert wird,
und wobei das Verfahren Exponieren einer geschädigten Region (D) des Objekts (O) gegenüber reparierender elektromagnetischer Strahlung (R) umfasst, die von mindestens einigen der darin dispergierten, optisch resonanten Partikel zu absorbieren ist, um optische Resonanz zu erzeugen, um Wärme zu erzeugen, um mindestens teilweise Bereiche der Matrix, die in thermischem Kontakt damit stehen, miteinander zu verschmelzen.

2. Verfahren nach Anspruch 1, wobei die optisch resonanten Partikel mehrmals hergestellt und in der Matrix angeordnet werden, um ihre optisch resonanten Eigenschaften aufrechtzuerhalten, um ausreichend Wärme zu erzeugen, um mindestens teilweise die Bereiche der Matrix, die in thermischem Kontakt damit stehen, miteinander zu verschmelzen.

3. Verfahren nach Anspruch 1 oder 2, wobei es sich bei dem Material um ein thermoplastisches Material handelt.

4. Verfahren nach Anspruch 1, 2 oder 3, wobei es sich bei dem Material um ein elastomeres Material handelt.

5. Verfahren nach einem der vorstehenden Ansprüche, wobei in dem Objekt (O) sowohl vor als auch nach Durchführen der Selbstreparatur die optisch resonanten Partikel in einer im Wesentlichen nicht-agglomerierten und im Wesentlichen nicht-selbstgesinterten Form innerhalb des Materials, das in einer kontinuierlichen festen Form vorliegt, einschließlich der selbstreparierten, geschädigten Region (D), dispergiert sind.

6. Verfahren nach Anspruch 5, wobei die im Wesentlichen nichtagglomerierte und im Wesentlichen nicht-selbstgesinterte Form sich bezieht auf das Fehlen einer wesentlichen Agglomeration und einer wesentlichen Selbstsinterung in Bezug auf eine Agglomeration und Selbstsinterung, die eine Veränderung in den Absorptionsspektren der optisch resonanten Partikel (P) in der Form von mindestens einer Verschiebung von einem oder mehreren optischen Resonanzpeaks von mindestens dem 5-fachen der vollen Breite beim halben Maximum und/oder eine Verbreiterung von einem oder mehreren optischen Resonanzpeaks von mindestens dem 5-fachen der vollen Breite beim halben Maximum bewirkt.

7. Verfahren nach einem der vorstehenden Ansprüche, wobei die optisch resonanten Partikel mit einer Antiagglomerationsbeschichtung beschichtet sind.

8. Verfahren nach Anspruch 7, wobei die Antiagglomerationsbeschichtung vorgenommen wird, um eine maximale Wärmeformbeständigkeit und/oder maximale chemische Wärmebeständigkeit zu erreichen.

9. Verfahren nach einem der vorstehenden Ansprüche, wobei die geschädigte Region (D) mindestens eine der folgenden Schäden oder Defekte aufweist: einen Schnitt, eine Spaltung, ein Loch, eine raue Oberfläche und eine Formänderung.

10. Verfahren nach einem der vorstehenden Ansprüche, wobei die geschädigte Region (D) Bereiche des Objekts (O) umfasst, die sich physisch durch eine Schädigung oder einen Defekt abgelöst haben, wobei das Verfahren das physische Inkontaktbringen der physisch abgelösten Bereiche vor und/oder während deren Exposition gegenüber der reparierenden elektromagnetischen Strahlung (R) umfasst.

11. Verfahren nach einem der vorstehenden Ansprüche, wobei für eine sich in einer inneren Position des Objekts (O) befindliche geschädigte Region (D) das Verfahren das Eindringen in das Objekt mit der reparierenden elektromagnetischen Strahlung (R) bis zu der inneren Position umfasst, so dass die geschädigte Region (D) gegenüber dieser Strahlung exponiert wird.

12. Verfahren nach einem der vorstehenden Ansprüche, wobei für ein Objekt (O) oder mindestens eine geschädigte Region (D) davon, die in Wasser angeordnet ist, das Verfahren Auswählen einer Wellenlänge oder einer Gruppe von Wellenlängen für die reparierende elektromagnetische Strahlung (R), gegenüber der die geschädigte Region (D) zu exponieren ist, die innerhalb eines der optischen Wellenlängen-Durchlässigkeitsfenster von Wasser fällt, umfasst.

13. Verfahren nach einem der vorstehenden Ansprüche, wobei es sich bei dem Objekt (O) um ein dreidimensionales Objekt handelt, das unter Anwenden eines Verfahrens mit schichtweiser Abscheidung hergestellt worden ist, indem auf eine bereits gebildete Schicht, die die Matrix mit darin dispergierten, optisch resonanten Partikeln umfasst, mindestens eine weitere Schicht dieses Materials in einer nicht-kontinuierlichen festen Form mit optisch resonanten Partikeln, die bereits darin dispergiert sind oder anschließend darauf bereitgestellt und darin dispergiert werden, aufbringt und die auf der weiteren Schicht bereitgestellten optisch resonanten Partikel gegenüber einer aufbauenden elektromagnetischen Strahlung exponiert, um sie in optische Resonanz zu versetzen, um Wärme zu erzeugen, um mindestens teilweise Partikel und/oder partikelförmige Bestandteile des Materials in einer nicht-kontinuierlichen festen Form der weiteren Schicht, die in thermischem Kontakt damit stehen, miteinander zu verschmelzen.

14. System zum Herstellen eines Objekts und zur Selbstreparatur des Objekts,
wobei das Objekt (O) eine Matrix eines Materials in einer kontinuierlichen festen Form mit darin dispergierten, optisch resonanten Partikeln umfasst, wobei die Matrix durch mindestens teilweises Verschmelzen von Partikeln und/oder von partikelförmigen Bestandteilen des Materials in einer nicht-kontinuierlichen festen Form mit von den optisch resonanten Partikeln übertragener Wärme hergestellt wurde, die dadurch erzeugt wurde, wenn eine optische Resonanz durch deren Exposition gegenüber aufbauender elektromagnetischer Strahlung induziert wird,
und wobei das System Folgendes umfasst
- Mittel zum Herstellen des Objekts (O), wobei die Mittel eine steuerbare elektromagnetische Strahlungsquelle umfassen, die konfiguriert und angeordnet ist, um die optisch resonanten Partikel gegenüber der aufbauenden elektromagnetischen Strahlung mit einer Wellenlänge zu exponieren, die so abgestimmt ist, dass sie mit der Resonanz der optisch resonanten Partikel übereinstimmt; und
- eine steuerbare elektromagnetische Strahlungsquelle (S), die konfiguriert und angeordnet ist, um eine geschädigte Region (D) des Objekts (O) gegenüber reparierender elektromagnetischer Strahlung (R) mit einer Wellenlänge zu exponieren, die so abgestimmt ist, dass sie mit der Resonanz der optisch resonanten Partikel übereinstimmt, um von einigen der darin dispergierten, optisch resonanten Partikel absorbiert zu werden, um sie in optische Resonanz zu versetzen, um Wärme zu erzeugen, um mindestens teilweise Bereiche der Matrix, die in thermischem Kontakt damit stehen, miteinander zu verschmelzen.

15. System nach Anspruch 14, ferner umfassend:
- Überwachungsmittel (M), das zum Überwachen von einem oder mehreren Parametern zumindest des geschädigten Bereichs (D) des Objekts (O) zumindest während der Exposition gegenüber der reparierenden elektromagnetischen Strahlung (R) konfiguriert und angeordnet ist, und entsprechende Überwachungssignale erzeugt; und
- eine Steuereinrichtung (C), die funktionell mit dem Überwachungsmittel (M) zum Empfang des Überwachungssignals und mit der steuerbaren elektromagnetischen Strahlungsquelle (S) verbunden ist, wobei die Steuereinrichtung (C) zur Steuerung des Betriebs der steuerbaren elektromagnetischen Strahlungsquelle (S) auf der Grundlage der empfangenen Überwachungssignale ausgelegt ist.

## Revendications

1. Procédé de production d'un objet et d'autoréparation dudit objet, dans lequel ledit objet (O) comprend une
matrice d'un matériau sous une forme solide continue avec des particules à résonance optique dispersées dans celle-ci, et dans lequel ladite matrice est constituée de particules et/ou de matière particulaire dudit matériau sous une forme solide non continue au moins partiellement fusionnées ensemble avec de la chaleur transférée à partir desdites particules à résonance optique qui est générée par celles-ci lors de la résonance optique induite par leur exposition à l'émission de rayonnement électromagnétique,
et dans lequel le procédé comprend l'exposition d'une région endommagée (D) dudit objet (O) à un rayonnement électromagnétique de réparation (R) destiné à être absorbé par au moins une partie desdites particules à résonance optique qui sont dispersées dans celle-ci, pour résonner de manière optique afin de générer de la chaleur pour fusionner au moins partiellement ensemble des parties de ladite matrice en contact thermique avec celles-ci.

2. Procédé selon la revendication 1, dans lequel lesdites particules à résonance optique sont constituées, et agencées dans ladite matrice, pour maintenir leurs propriétés de résonance optique afin de générer suffisamment de chaleur pour fusionner au moins partiellement ensemble les parties de ladite matrice en contact thermique avec celles-ci, une pluralité de fois.

3. Procédé selon la revendication 1 ou 2, dans lequel ledit matériau est un matériau thermoplastique.

4. Procédé selon la revendication 1, 2 ou 3, dans lequel ledit matériau est un matériau élastomère.

5. Procédé selon l'une quelconque des revendications précédentes, dans lequel, dans l'objet (O), à la fois avant et après la réalisation de l'autoréparation, les particules à résonance optique sont dispersées sous une forme sensiblement non agglomérée et sensiblement non auto-fritté dans le matériau qui se trouve sous une forme solide continue, incluant la région endommagée autoréparée (D).

6. Procédé selon la revendication 5, dans lequel ladite forme sensiblement non agglomérée et sensiblement non auto-frittée fait référence à l'absence d'une agglomération sensible et d'un autofrittage sensible se référant à une agglomération et à un autofrittage qui provoque un changement du spectre d'absorption des particules à résonance optique (P) sous la forme d'un moins un décalage dans un ou plusieurs pics de résonance optique supérieurs ou égaux à cinq fois la largeur totale à mi-hauteur et/ou au moins un élargissement d'un ou plusieurs pics de résonance optique supérieurs ou égaux à cinq fois la largeur totale à mi-hauteur.

7. Procédé selon l'une quelconque des revendications précédentes, dans lequel lesdites particules à résonance optique sont revêtues d'un revêtement anti-agglomération.

8. Procédé selon la revendication 7, dans lequel ledit revêtement anti-agglomération est constitué afin de maximiser la stabilité thermique de la forme et/ou pour maximiser la stabilité thermique chimique.

9. Procédé selon l'une quelconque des revendications précédentes, dans lequel ladite région endommagée (D) inclut au moins un des dommages ou défauts suivants : une coupure, une rupture, un trou, une surface rugueuse, et une altération morphologique.

10. Procédé selon l'une quelconque des revendications précédentes, dans lequel ladite région endommagée (D) inclut des parties de l'objet (O) qui ont été physiquement détachées par un dommage ou un défaut, le procédé comprenant le fait d'amener en contact physique lesdites parties physiquement détachées avant et/ou pendant leur exposition au rayonnement électromagnétique de réparation (R).

11. Procédé selon l'une quelconque des revendications précédentes, dans lequel pour une région endommagée (D) placée à un emplacement intérieur de l'objet (O), le procédé comprend la pénétration dans l'objet avec le rayonnement électromagnétique de réparation (R) jusqu'audit emplacement intérieur de façon que la région endommagée (D) soit exposée à celui-ci.

12. Procédé selon l'une quelconque des revendications précédentes, dans lequel pour un objet (O) ou au moins une région endommagée (D) de celui-ci placée dans de l'eau, le procédé comprend la sélection d'une longueur d'onde ou d'ensembles de longueurs d'onde, pour le rayonnement électromagnétique de réparation (R) auquel la région endommagée (D) doit être exposée, qui tombent dans l'une des fenêtres de longueurs d'onde de transparence optique de l'eau.

13. Procédé selon l'une quelconque des revendications précédentes, dans lequel ledit objet (O) est un objet tridimensionnel qui a été fabriqué en utilisant un processus de dépôt couche par couche, en appliquant, sur une couche déjà formée qui inclut ladite matrice avec des particules à résonance optique dispersées dans celle-ci, au moins une autre couche dudit matériau sous une forme solide non-continue avec des particules à résonance optique déjà dispersées dans celle-ci ou fournies ensuite sur celle-ci et dispersées dans celle-ci, et en exposant à une émission de rayonnement électromagnétique les particules à résonance optique fournies sur l'autre couche pour les faire entrer en résonance optique afin de générer de la chaleur afin de fusionner au moins partiellement ensemble des particules et/ou des matières particulaires, du matériau sous une forme solide non-continue de l'autre couche, qui sont en contact thermique avec celles-ci.

14. Système de production d'un objet et d'autoréparation dudit objet, dans lequel ledit objet (O) comprend une matrice d'un matériau sous une forme solide continue avec des particules à résonance optique dispersées dans celle-ci, dans lequel ladite matrice a été constituée en fusionnant au moins partiellement ensemble des particules et/ou matières particulaires dudit matériau sous une forme solide non continue avec de la chaleur transférée à partir desdites particules à résonance optique qui a été générée par celles-ci lors de la résonance optique induite par leur exposition à l'émission de rayonnement électromagnétique,
et dans lequel le système comprend :
- un moyen de fabrication dudit objet (O), ledit moyen comprenant une source de rayonnement électromagnétique contrôlable configurée et agencée pour exposer lesdites particules à résonance optique à ladite émission de rayonnement électromagnétique, avec une longueur d'onde réglée pour correspondre à la résonance des particules à résonance optique ; et
- une source de rayonnement électromagnétique contrôlable (S) configurée et agencée pour exposer une région endommagée (D) dudit objet (O) à un rayonnement électromagnétique de réparation (R), avec une longueur d'onde réglée pour correspondre à la résonance des particules à résonance optique, destiné à être absorbé par une partie desdites particules à résonance optique qui sont dispersées dans celle-ci pour résonner de manière optique afin de générer de la chaleur pour fusionner au moins partiellement ensemble des parties de ladite matrice en contact thermique avec celles-ci.

15. Système selon la revendication 14, comprenant en outre :
- un moyen de surveillance (M) configuré et agencé pour surveiller un ou plusieurs paramètres d'au moins la région endommagée (D) de l'objet (O), au moins pendant son exposition audit rayonnement électromagnétique de réparation (R), et générer des signaux de surveillance correspondants ; et
- un dispositif de contrôle (C) connecté de manière opérationnelle audit moyen de surveillance (M) pour recevoir ledit signal de surveillance, et à la source de rayonnement électromagnétique contrôlable (S), ledit dispositif de contrôle (C) étant conçu pour contrôler le fonctionnement de la source de rayonnement électromagnétique contrôlable (S) sur la base des signaux de surveillance reçus.
